# EUROPEAN PATENT APPLICATION

(11) **EP 4 803 251 A2**
(43) Date of publication of application: **09.09.2026**
(21) Application number: 26195075.2
(22) Date of filing: 23.08.2024
(51) Int. Cl.: B23K 26/382

(54) **MACHINING WITH REAL TIME MONITORING OF INTERACTION BETWEEN LASER BEAM AND WORKPIECE**

(30) Priority: 25.08.2023 US 202318238226
(62) Document number(s) of the earlier application(s) in accordance with Art. 76 EPC: 24196288.5 / 4 520 470
(71) Applicant: RTX Corporation, Farmington, CT 06032 (US)
(72) Inventor: DENNEY, Paul E., Northborough, 01532 (US); MALICKI, Peter M., East Hampton, 06424 (US)
(74) Representative: Dehns

(57) **Abstract**

A manufacturing method is provided during which an aperture (64) is machined into a workpiece (118) using a laser beam (114). An image of an interaction between the laser beam (114) and the workpiece (118) is captured during the machining of the aperture (64) using a camera (120) with an electronic shutter (124). A parameter associated with the aperture (64) is determined based on information from the image.

## Description

### BACKGROUND OF THE DISCLOSURE

### 1. Technical Field

This disclosure relates generally to machining and, more particularly, to machining a workpiece with a laser beam.

### 2. Background Information

A gas turbine engine includes various fluid cooled components such as turbine blades and turbine vanes. Such fluid cooled components may include one or more cooling apertures extending through a sidewall of the respective component. Various methods are known in the art for forming cooling apertures, including methods which machine the cooling apertures with a laser beam. While these known cooling aperture formation methods have various benefits, there is still room in the art form improvement.

### SUMMARY OF THE DISCLOSURE

According to an aspect of the present disclosure, a manufacturing method is provided during which an aperture is machined into a workpiece using a laser beam. An image of an interaction between the laser beam and the workpiece is captured during the machining of the aperture using a camera with an electronic shutter. A parameter associated with the aperture is determined based on information from the image.

According to another aspect of the present disclosure, another manufacturing method is provided during which a workpiece is machined using a laser beam to form a feature in the workpiece. An image is captured of an interaction between the laser beam and material of the workpiece that is machined to form the feature in the workpiece. The image is captured using a camera with an electronic shutter. A parameter associated with the feature being machined in the workpiece is determined based on information from the image.

According to still another aspect of the present disclosure, another manufacturing method is provided during which a workpiece is machined using a laser beam to form a feature in the workpiece. An interaction is monitored between the laser beam and material of the workpiece being machined to form the feature in the workpiece. The interaction is monitored in real time during the machining of the workpiece using a camera with an electronic shutter. The camera outputs data indicative of the interaction. The data output by the camera is processed to determine a parameter associated with the feature being machined in the workpiece.

The following optional features may be applied to any of the above aspects.

The feature may be configured as or otherwise include a hole in the workpiece.

The manufacturing method may also include forming a component of a turbine engine. The forming of the component of the turbine engine may include the machining of the workpiece to form the feature. The feature may be configured as or otherwise include a cooling hole in the component of the turbine engine.

The parameter may be indicative of a geometry of the interaction between the laser beam and the workpiece.

The parameter may be indicative of a diameter of the interaction between the laser beam and the workpiece.

The parameter may be indicative of an area of the interaction between the laser beam and the workpiece.

The parameter may be indicative of break-through of the laser beam through the workpiece.

The parameter may be indicative of a geometry of a section of the aperture which has been machined into the workpiece at a point in time when the image is captured.

The parameter may be indicative of a diameter of a section of the aperture which has been machined into the workpiece at a point in time when the image is captured.

The parameter may be indicative of an area of a section of the aperture which has been machined into the workpiece at a point in time when the image is captured.

The manufacturing method may also include synchronizing the electronic shutter with a pulse of the laser beam to capture the image of the interaction between the pulse of the laser beam and the workpiece.

The electronic shutter may be synchronized with the pulse of the laser beam to capture the image at an end of the pulse of the laser beam.

The electronic shutter may be synchronized with the pulse of the laser beam to capture the image at a beginning of the pulse of the laser beam.

The electronic shutter may have a shutter time equal to or less than 500 microseconds.

The camera may include a complementary metal-oxide semiconductor image detector which captures the image.

The camera may include a charged coupled device image detector which captures the image.

A line of sight of the camera may be parallel with the laser beam.

The manufacturing method may also include forming a component of a turbine engine. The forming of the component of the turbine engine may include the machining of the aperture into the workpiece. The aperture may be configured as or otherwise include a cooling hole.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side cutaway illustration of a geared turbofan turbine engine.
FIG. 2 is an illustration of a portion of a fluid cooled component.
FIG. 3 is a sectional illustration of a portion of the fluid cooled component taken along line 3-3 in FIG. 2.
FIG. 4 is a sectional illustration of a portion of the fluid cooled component with another cooling aperture arrangement.
FIG. 5 is a flow diagram of a method for manufacturing a component.
FIG. 6 is a schematic illustration of a manufacturing system forming an aperture in a portion of a workpiece.
FIGS. 7A-C are sectional illustrations of a portion of the workpiece at various stages of aperture formation.
FIG. 8 is a schematic illustration of the manufacturing system forming the aperture in a portion of the workpiece, where the manufacturing system includes an additional camera.

### DETAILED DESCRIPTION

The present disclosure includes methods for manufacturing a component such as a fluid cooled component of a gas turbine engine. The term "manufacturing" may describe a process for original manufacturing the component; e.g., creating a brand new component. The term "manufacturing" may also or alternatively describe a process for remanufacturing or otherwise repairing the component; e.g., restoring one or more features of a previously formed component to brand new condition, similar to brand new condition, better than brand new condition, etc. The component, for example, may be repaired to fix one or more defects (e.g., cracks, wear and/or other damage) imparted during previous use of the component. The component may also or alternatively be repaired to fix one or more defects imparted during the initial formation of the component.

For ease of description, the turbine engine may be described below as a turbofan turbine engine. The present disclosure, however, is not limited to such an exemplary gas turbine engine. The turbine engine, for example, may alternatively be configured as a turbojet turbine engine, a turboprop turbine engine, a turboshaft turbine engine, a propfan turbine engine, a pusher fan turbine engine or an auxiliary power unit (APU) turbine engine. The turbine engine may be configured as a geared turbine engine or a direct drive turbine engine. The present disclosure is also not limited to aircraft applications. The turbine engine, for example, may alternatively be configured as a ground-based industrial turbine engine for power generation, or any other type of turbine engine which utilizes fluid cooled components.

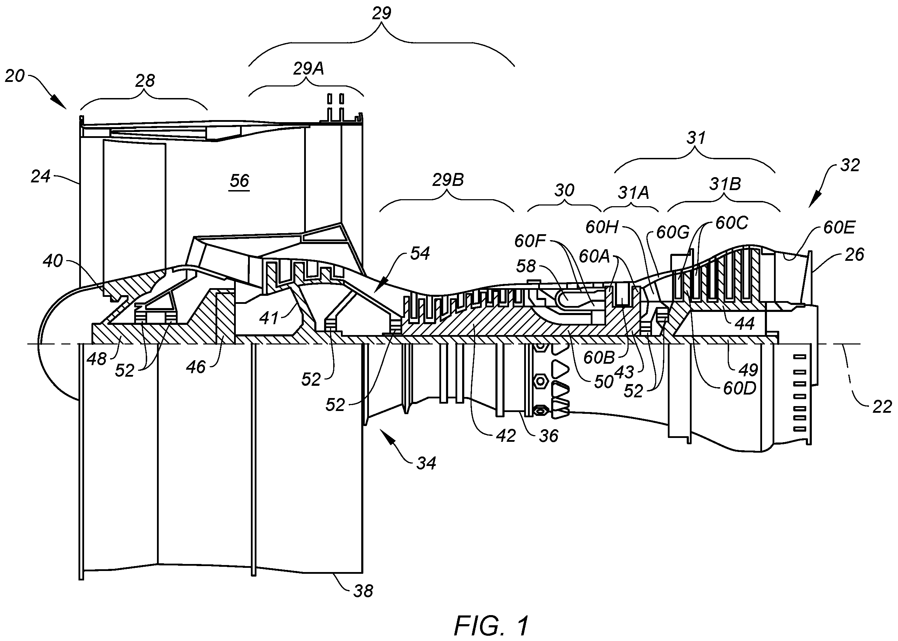

FIG. 1 is a side cutaway illustration of the turbofan turbine engine 20. This turbine engine 20 extends along an axial centerline 22 between a forward, upstream airflow inlet 24 and an aft, downstream combustion products exhaust 26. The turbine engine 20 includes a fan section 28, a compressor section 29, a combustor section 30, a turbine section 31 and an exhaust section 32 (partially shown in FIG. 1). The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31B of FIG. 1 are arranged sequentially along the axial centerline 22 within an engine housing 34. This engine housing 34 includes an inner case 36 (e.g., a core case) and an outer case 38 (e.g., a fan case). The inner case 36 may house one or more of the engine sections 29A-31B; e.g., a core of the turbine engine 20. The outer case 38 may house at least the fan section 28.

Each of the engine sections 28, 29A, 29B, 31A and 31B includes a respective bladed rotor 40-44. Each of these bladed rotors 40-44 includes a plurality of rotor blades arranged circumferentially around and connected to one or more respective rotor disks. The rotor blades, for example, may be formed integral with or mechanically fastened, welded, brazed and/or otherwise attached to the respective rotor disk(s).

The fan rotor 40 is connected to a geartrain 46, for example, through a fan shaft 48. The geartrain 46 and the LPC rotor 41 are connected to and driven by the LPT rotor 44 through a low speed shaft 49. The HPC rotor 42 is connected to and driven by the HPT rotor 43 through a high speed shaft 50. The engine shafts 48-50 are rotatably supported by a plurality of bearings 52; e.g., rolling element and/or thrust bearings. Each of these bearings 52 is connected to the engine housing 34 by at least one stationary structure such as, for example, an annular support frame.

During operation, air enters the turbine engine 20 through the airflow inlet 24. This air is directed through the fan section 28 and into a core flowpath 54 and a bypass flowpath 56. The core flowpath 54 extends sequentially through the engine sections 29A-32; e.g., the engine core. The air within the core flowpath 54 may be referred to as "core air". The bypass flowpath 56 extends through a bypass duct, which bypasses the engine core. The air within the bypass flowpath 56 may be referred to as "bypass air".

The core air is compressed by the LPC rotor 41 and the HPC rotor 42 and directed into a combustion chamber 58 of a combustor in the combustor section 30. Fuel is injected into the combustion chamber 58 and mixed with the compressed core air to provide a fuel-air mixture. This fuel air mixture is ignited and combustion products thereof flow through and sequentially cause the HPT rotor 43 and the LPT rotor 44 to rotate. The rotation of the HPT rotor 43 and the LPT rotor 44 respectively drive rotation of the HPC rotor 42 and the LPC rotor 41 and, thus, compression of the air received from a core airflow inlet. The rotation of the LPT rotor 44 also drives rotation of the fan rotor 40, which propels the bypass air through and out of the bypass flowpath 56. The propulsion of the bypass air may account for a majority of thrust generated by the turbine engine 20; e.g., more than seventy-five percent (75%) of engine thrust. The turbine engine 20 of the present disclosure, however, is not limited to the foregoing exemplary thrust ratio.

The turbine engine 20 includes a plurality of fluid cooled components (e.g., 60AH; generally referred to as "60") arranged within, for example, the combustor section 30, the turbine section 31 and/or the exhaust section 32. Examples of these fluid cooled components 60 include airfoils such as, but not limited to, a rotor blade airfoil (e.g., 60A, 60D) and a stator vane airfoil (e.g., 60B, 60C, 60H). Other examples of the fluid cooled components 60 include flowpath walls such as, but not limited to, a combustor liner (e.g., 60F), an exhaust duct liner (e.g., 60E), a shroud or other flowpath wall (e.g., 60G), a rotor blade platform, a stator vane platform, and the like. Of course, various other fluid cooled components may be included in the turbine engine 20, and the present disclosure is not limited to any particular types or configurations thereof.

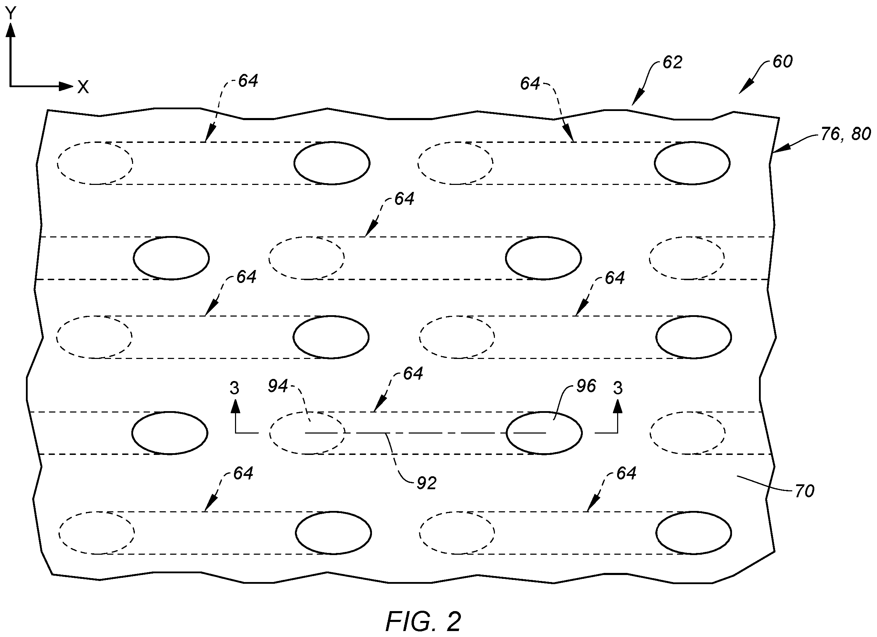

FIG. 2 illustrates a portion of one of the fluid cooled components 60 within the turbine engine 20. This fluid cooled component 60 has a component wall 62 (e.g., a sidewall or an endwall) configured with one or more cooling apertures 64 such as effusion apertures.

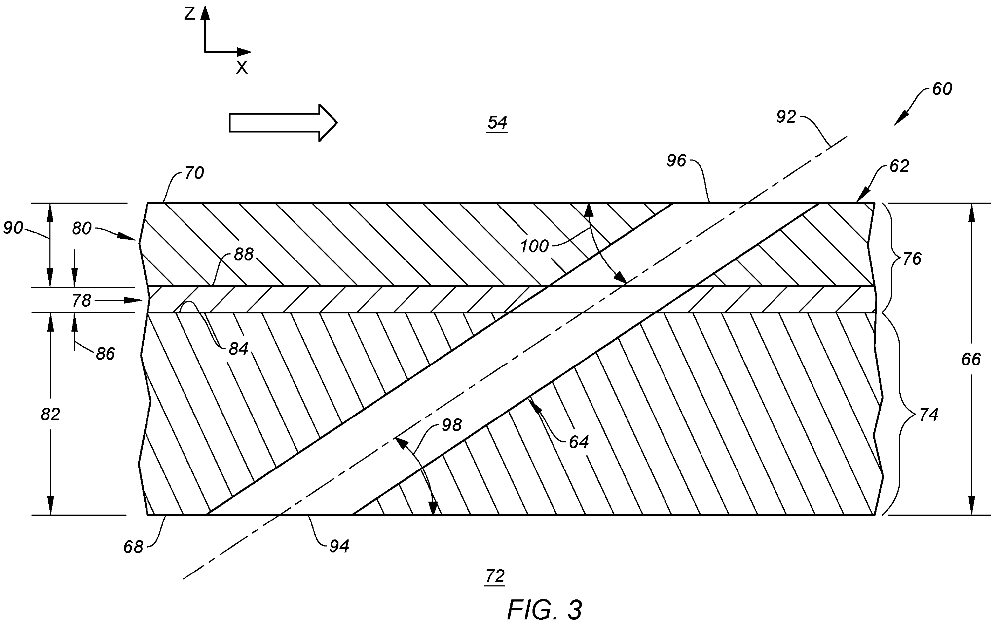

Referring to FIG. 3, the component wall 62 has a thickness 66 that extends vertically (e.g., along a z-axis) between and to a first surface 68 of the component wall 62 and a second surface 70 of the component wall 62. The component first surface 68 may be configured as an interior, a cold side and/or a back surface of the component wall 62. The component first surface 68, for example, may at least partially form a peripheral boundary of a cooling fluid volume 72 (e.g., a cavity or a passage) along the component wall 62. The component first surface 68 may thereby be subject to relatively cool fluid (e.g., cooling air) supplied to the cooling fluid volume 72. This cooling fluid volume 72 may be an internal volume formed within the fluid cooled component 60 where, for example, the component 60 is an airfoil. Alternatively, the cooling fluid volume 72 may be an external volume formed external to the fluid cooled component 60 where, for example, the component 60 is a flowpath wall. The component second surface 70 may be configured as an exterior, a hot side and/or a face surface of the fluid cooled component 60 and its component wall 62. The component second surface 70, for example, may at least partially form a peripheral boundary of a portion of, for example, the core flowpath 54 along the component wall 62. The component second surface 70 may thereby be subject to relative hot fluid (e.g., combustion products) flowing through the core flowpath 54 within, for example, one of the engine sections 30-32 of FIG. 1.

The component wall 62 of FIG. 3 includes a component substrate 74 and a coating system 76. The coating system 76 may include one or more external component coatings 78 and 80 over the component substrate 74.

The component substrate 74 at least partially or completely forms and carries the component first surface 68. The component substrate 74 has a thickness 82 that extends vertically (e.g., along the z-axis) between and to the component first surface 68 and a second surface 84 of the component substrate 74. The substrate second surface 84 may be configured as an exterior surface of the component substrate 74 prior to being (e.g., partially or completely) covered by the coating system 76 and its one or more component coatings 78 and 80. The substrate thickness 82 may be greater than one-half (1/2) of the wall thickness 66. The substrate thickness 82, for example, may be between two-third (2/3) and four-fifths (4/5) of the wall thickness 66. In other embodiments, however, it is contemplated the substrate thickness 82 may be greater than four-fifths (4/5) of the wall thickness 66 or less than one-half (1/2) of the wall thickness 66.

The component substrate 74 is constructed from substrate material. This substrate material may be an electrically conductive material. The substrate material, for example, may be or otherwise include metal. Examples of the metal include, but are not limited to, nickel (Ni), titanium (Ti), aluminum (Al), chromium (Cr), cobalt (Co), and alloys thereof. The metal, for example, may be a nickel or cobalt based superalloy such as, but not limited to, PWA 1484 or PWA 1429.

The inner coating 78 may be configured as a bond coating between the component substrate 74 and the outer coating 80. The inner coating 78 of FIG. 3 is bonded (e.g., directly) to the substrate second surface 84. The inner coating 78 at least partially or completely covers the substrate second surface 84 (e.g., along an x-y plane of FIG. 2). The inner coating 78 has a thickness 86 that extends vertically (e.g., along the z-axis) between and to the component substrate 74 and the outer coating 80. This inner coating thickness 86 may be less than one-seventh (1/7) of the wall thickness 66. The inner coating thickness 86, for example, may be between one-eighth (1/8) and one-fortieth (1/40) of the wall thickness 66.

The inner coating 78 is constructed from inner coating material. This inner coating material may be an electrically conductive material. The inner coating material, for example, may be or otherwise include metal. Examples of the metal include, but are not limited to, MCrAlY and MAlCrX, where "M" is nickel (Ni), cobalt (Co), iron (Fe) or any combination thereof, and where "Y" or "X" is hafnium (Hf), yttrium (Y), silicon (Si) or any combination thereof. The MCrAlY and MAlCrX may be further modified with strengthening elements such as, but not limited to, tantalum (Ta), rhenium (Re), tungsten (W), molybdenum (Mo) or any combination thereof. An example of the MCrAlY is PWA 286.

The inner coating 78 may be formed from a single layer of the inner coating material. The inner coating 78 may alternatively be formed from a plurality of layers of the inner coating material, where the inner coating material within each of those inner coating layers may be the same as one another or different from one another.

The outer coating 80 may be configured as a protective coating for the component substrate 74 and, more generally, the fluid cooled component 60. The outer coating 80, for example, may be configured as a thermal barrier layer and/or an environmental layer. The outer coating 80 at least partially or completely forms and carries the component second surface 70. The outer coating 80 of FIG. 3 is bonded (e.g., directly) to a second (e.g., exterior) surface 88 of the inner coating 78. The outer coating 80 at least partially or completely covers the inner coating second surface 88 as well as the underlying substrate second surface 84 (e.g., along the x-y plane of FIG. 2). The outer coating 80 has a thickness 90 that extends vertically (e.g., along the z-axis) between and to the inner coating 78 and the component second surface 70. This outer coating thickness 90 may be less than one-half (1/2) of the wall thickness 66. The outer coating thickness 90, for example, may be between one-third (1/3) and one-eighth (1/8) of the wall thickness 66. In other embodiments, however, it is contemplated the outer coating thickness 90 may be greater than one-half (1/2) of the wall thickness 66 or less than one-eighth (1/8) of the wall thickness 66.

The outer coating 80 is constructed from outer coating material. This outer coating material may be a non-electrically conductive material. The outer coating material, for example, may be or otherwise include ceramic. Examples of the ceramic include, but are not limited to, yttria stabilized zirconia (YSZ) and gadolinium zirconate (GdZ). The outer coating material of the present disclosure, however, is not limited to non-electrically conductive materials. In other embodiments, for example, the outer coating material may be an electrically conductive material; e.g., metal.

The outer coating 80 may be formed from a single layer of the outer coating material. The outer coating 80 may alternatively be formed from a plurality of layers of the outer coating material, where the outer coating material within each of those outer coating layers may be the same as one another or different from one another. For example, the outer coating 80 may include a thin interior layer of the YSZ and a thicker exterior later of the GdZ.

Each of the cooling apertures 64 extends along a longitudinal centerline 92 of the respective cooling aperture 64 between and to an inlet 94 into the respective cooling aperture 64 and an outlet 96 from the respective cooling aperture 64. This aperture centerline 92 may have a straight line geometry (e.g., in the x-y plane, in an x-z plane and/or in a y-z plane) from the cooling aperture inlet 94, through the component wall 62, to the cooling aperture outlet 96. The aperture centerline 92 of FIG. 3 is angularly offset from the component first surface 68 by a first angle 98, and the aperture centerline 92 is angularly offset from the component second surface 70 by a second angle 100. The first angle 98 of FIG. 3 may be equal to the second angle 100. The first angle 98 and the second angle 100 are each non-zero acute angles - greater than zero degrees (0°) and less than ninety degrees (90°). The first angle 98 and the second angle 100, for example, may each be between ten degrees (10°) and eighty degrees (80°); e.g., between twenty degrees (20°) and forty degrees (40°), or between forty degrees (40°) and sixty degrees (60°). Of course, in other embodiments, the first angle 98 and/or the second angle 100 may each be greater than eighty degrees (80°); e.g., a ninety degree (90°) right angle.

The cooling aperture inlet 94 of FIG. 3 is located in the component first surface 68. The cooling aperture inlet 94 thereby fluidly couples its respective cooling aperture 64 with the cooling fluid volume 72 along the component first surface 68. The cooling aperture inlet 94 has a cross-sectional geometry (e.g., shape and dimensions) when viewed in a reference plane parallel with the component first surface 68 at the respective cooling aperture inlet 94. This inlet geometry may have a curved shape; e.g., an oval shape, a circular shape, etc.

The cooling aperture outlet 96 of FIG. 3 is located in the component second surface 70. The cooling aperture outlet 96 thereby fluidly couples its respective cooling aperture 64 with the core flowpath 54 along the component second surface 70. The cooling aperture outlet 96 has a cross-sectional geometry (e.g., shape and dimensions) when viewed in a reference plane parallel with the component second surface 70 at the respective cooling aperture outlet 96. This outlet geometry may have a curved shape (e.g., an oval shape, a circular shape, or an amorphous curved shape), a polygonal shape (e.g., an elongated rectangular shape, a (e.g., equilateral) trapezoidal shape, or an amorphous polygonal shape), a combined curved-polygonal shape, or any other regular or irregular shape.

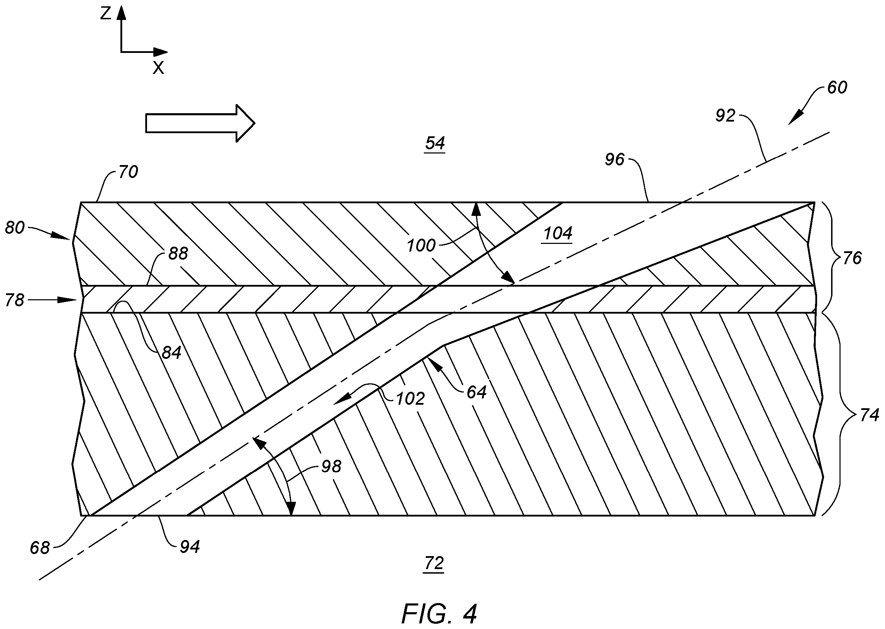

The outlet geometry may be exactly or substantially the same as the inlet geometry. For example, the shape of the cooling aperture outlet 96 may be exactly or substantially the same as the shape of the cooling aperture inlet 94. Dimensions (e.g., a width) of the cooling aperture outlet 96 may also be exactly or substantially equal to dimensions (e.g., a width) of the cooling aperture inlet 94. Alternatively, referring to FIG. 4, one or more of the cooling apertures 64 may each be configured with a metering section 102 at its cooling aperture inlet 94 and a diffuser section 104 at its cooling aperture outlet 96. Here, the dimensions of the cooling aperture outlet 96 are different (e.g., greater) than the dimensions of the cooling aperture inlet 94. The shape of the cooling aperture outlet 96 may also be different than the shape of the cooling aperture inlet 94. More particularly, the metering section 102 may have a uniform (e.g., constant) cross-sectional geometry as the respective cooling aperture 64 extends from its cooling aperture inlet 94 to its diffuser section 104. The diffuser section 104, by contrast, may have a cross-sectional geometry that changes (e.g., expands) as the respective cooling aperture 64 extends from its metering section 102 to its cooling aperture outlet 96. In addition, the aperture centerline 92 of FIG. 4 has a non-straight line (e.g., bent, curved, etc.) geometry, for example, at an intersection between the metering section 102 and the diffuser section 104. The first angle 98 of FIG. 4 is thereby different (e.g., greater) than the second angle 100. However, for ease of description, the cooling apertures 64 may be described below as shown in FIG. 3; e.g., without diffuser sections.

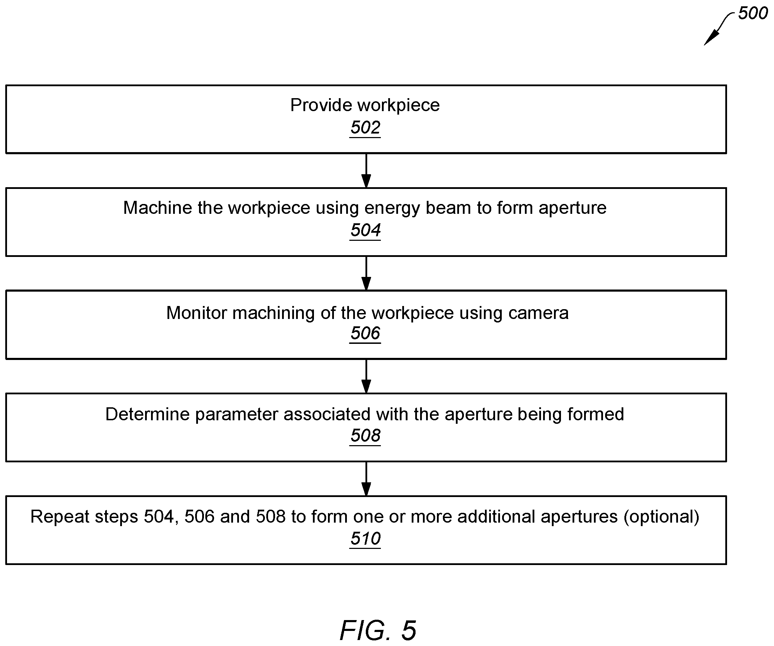

FIG. 5 is a flow diagram of a method 500 for manufacturing a component. For ease of description, the manufacturing method 500 is described below with reference to original manufacturing the fluid cooled component 60 of FIG. 3. The manufacturing method 500 of the present disclosure, however, is not limited to manufacturing such an exemplary fluid cooled component nor to manufacturing fluid cooled components in general. The manufacturing method 500, for example, may alternatively be performed to manufacture the fluid cooled component 60 of FIG. 4 or a component with various other machined features; e.g., cooling apertures or other through-holes, etc. Moreover, the manufacturing method 500 may also be performed for remanufacturing and/or otherwise repairing a previously originally manufactured component.

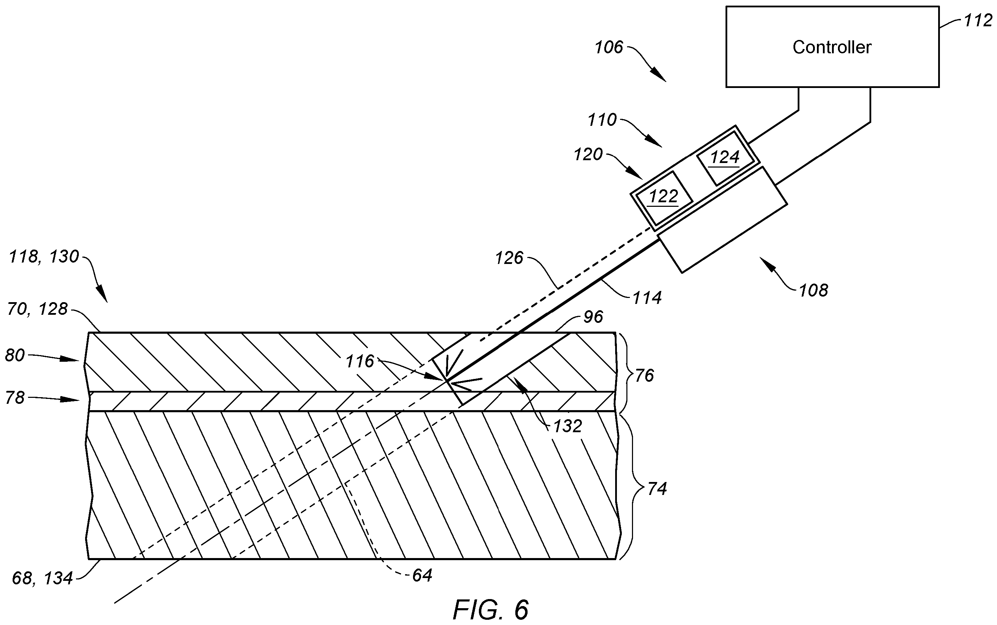

Referring to FIG. 6, the manufacturing method 500 is performed using a manufacturing system 106. This manufacturing system 106 of FIG. 6 includes a machining system 108, a monitoring system 110 and a controller 112.

The machining system 108 is configured to generate a laser beam 114. The machining system 108 is further configured to direct the laser beam 114 to a target location 116 on a workpiece 118 to machine away (e.g., ablate or otherwise remove) material from the workpiece 118; e.g., to form an aperture such as one of the cooling apertures 64 of FIG. 3. The machining system 108 may be configured as or otherwise include a Nd:YAG laser system, a fiber laser percussion drilling system, a Yb disk laser system, or an ultrashort pulse laser system (e.g., a nano-, pico-, or femto- laser system).

The monitoring system 110 is configured to monitor (e.g., in real time) an interaction between the laser beam 114 and the workpiece 118 at (e.g., on, adjacent or proximate) the target location 116 while the material of the workpiece 118 is being machined away. The monitoring system 110 of FIG. 6, for example, includes a camera 120 (e.g., a digital camera), which camera 120 includes at least one image detector 122 and an electronic shutter 124. The image detector 122 is configured to capture an image of at least (or only) part of the interaction between the laser beam 114 and the workpiece 118 at the target location 116 while the material of the workpiece 118 is being machined away. The image detector 122, for example, may have a line of sight 126 that is parallel with the laser beam 114 and/or directed to (e.g., focused on) the target location 116 where the laser beam 114 is machining away the material from the workpiece 118. The image detector 122, more particularly, may have a "gun barrel view" along the laser beam 114 to the target location 116. Examples of the image detector 122 include a complementary metal-oxide semiconductor (CMOS) image detector and a charged coupled device (CCD) image detector. The electronic shutter 124 is a shutter for the camera 120 without any moving parts. The electronic shutter 124, for example, gathers information from the image detector 122 over a certain (e.g., predetermined) shutter time; e.g., a select portion of an exposure time. This portion of the exposure time may be significantly shorter than that which can be achieved with a mechanical shutter. The exposure time may be as short as about 1/60 or 1/120 of a second. The electronic shutter 124, on the other hand, may facilitate the collection of light for less than about five hundred microseconds; e.g., between five microseconds and fifteen microseconds. Thus, utilizing the electronic shutter 124, the camera 120 may capture a relatively detailed image of the interaction between the laser beam 114 and the workpiece 118 at the target location 116 with a relatively low quantity of light. By contrast, without the electronic shutter 124 (or with use of only a mechanical shutter), the image of the interaction between the laser beam 114 and the workpiece 118 at the target location 116 would be washed out by overexposure to the intense light output from the laser beam 114. An example of the camera 120 is a Keyence CV-X vision system, which is produced by Keyence Corporation of Osaka, Japan. Of course, in other embodiments, it is contemplated the camera 120 may also include a mechanical shutter, a light filter, etc. Upon capturing the image, the camera 120 and, more generally, the monitoring system 110 is configured to output image data indicative of the capture image.

Mirrors and/or beam directors for the machining system 108 may be configured to block the laser wavelengths from the camera. This arrangement may facilitate making the line of sight 126 coaxial with the laser beam 114. In such embodiments, mirrors and/or beam directors may be used to align the line of sight 126 and the laser beam 114 to the target location 116; schematically shown in FIG. 6. It is contemplated, however, the line of sight 126 and the laser beam 114 may alternatively be parallel (or non-parallel) and slightly offset from one another; e.g., while focused at the common target location 116.

In some embodiments, the camera 120 with the electronic shutter 124 may be retrofitted with an existing machining system. The camera 120, for example, may replace a pre-existing camera without an electronic shutter. Alternatively, the camera 120 may be configured in addition to a pre-existing camera without an electronic shutter; e.g., plugged into another "side" port.

In some embodiments, the camera 120 may alternatively include a simple photo detector; e.g., without the electronic shutter 124. In such embodiments, the photo detector may be used to measure an amount of light and/or a wavelength of the light being emitted by an interaction between the laser beam 114 and the workpiece 118.

The controller 112 is in signal communication with (e.g., hardwired and/or wirelessly coupled to) the machining system 108 and the monitoring system 110. This controller 112 is configured to control operation and/or synchronize operation of the machining system 108 and the monitoring system 110 to facilitate performance of the manufacturing method 500.

In step 502, the workpiece 118 is provided. This workpiece 118 may be a preform of the fluid cooled component 60 being manufactured. The workpiece 118, for example, may generally have the same configuration (e.g., construction, shape, size, etc.) as that of the fluid cooled component 60 being manufactured. The workpiece 118 of FIG. 6, in particular, includes the component substrate 74 and the coating system 76 applied over the component substrate 74. The workpiece 118 of FIG. 6, however, does not include any (or at least one or more) of the cooling apertures 64 which is/are to be formed during the manufacturing method 500. The present disclosure, however, is not limited to such an exemplary workpiece configuration. For example, the workpiece 118 may alternatively omit the outer coating 80 or the entire coating system 76, where the cooling apertures 64 are solely formed in the component substrate 74 and/or the outer coating 80 or the entire coating system 76 are applied subsequent to formation of the aperture(s) 64 in the component substrate 74.

In step 504, the workpiece 118 is machined to form a respective one of the cooling apertures 64. The controller 112, for example, may signal the machining system 108 to direct its laser beam 114 to the target location 116 on the workpiece 118. At the target location 116, the laser beam 114 machines away material of the workpiece 118; e.g., outer coating material, inner coating material and/or substrate material depending upon which portion of the respective cooling aperture 64 is being formed. The laser beam 114 may be directed onto the target location 116 as a constant laser beam (e.g., without pulses) or alternatively as a pulsed laser beam (e.g., with pulses). When directed as the pulsed laser beam, the laser beam 114 may have a pulse frequency between ten and twenty hertz (Hz). However, with some laser systems (e.g., a Nd:YAG laser system), the pulse frequency may be as low as 0.5 hertz. And with other laser systems (e.g., a fiber laser system), the pulse frequency may be as high as one-thousand hertz.

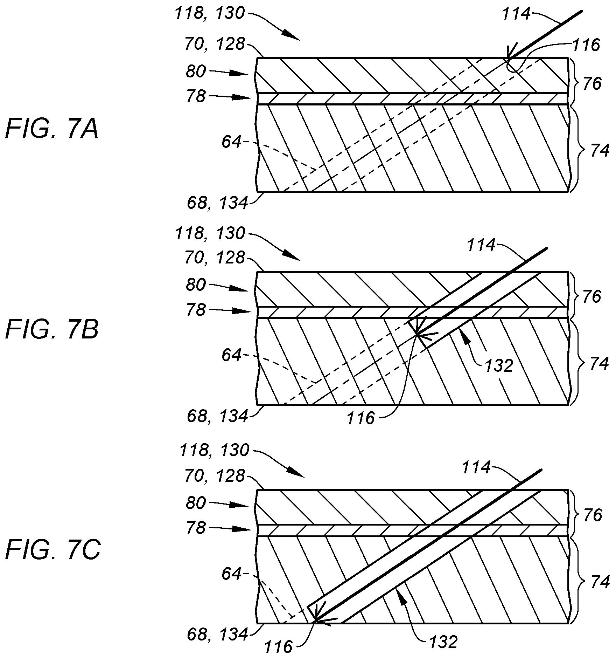

The target location 116 corresponds to a location on the workpiece 118 at which the respective cooling aperture 64 is to be formed in the workpiece 118. This target location 116 may change as the respective cooling aperture 64 is being formed. For example, referring to FIG. 7A, the target location 116 may be on a second surface 128 of the workpiece 118 (e.g., the component second surface 70 of the fluid cooled component 60) prior to or at a start of machining away material from the workpiece 118 to form the respective cooling aperture 64; e.g., at the start of the formation of the respective cooling aperture 64. Referring to FIG. 7B, the target location 116 may be at an intermediate location within a wall 130 of the workpiece 118 (e.g., the component wall 62) following formation of a section 132 (e.g., a longitudinal first 1/3, 1/2 or 2/3 portion) of the respective cooling aperture 64 in the workpiece 118. Referring to FIG. 7B, the target location 116 may be approximately at a first surface 134 of the workpiece 118 (e.g., the component first surface 68 of the fluid cooled component 60) just prior to and/or at breakthrough of the laser beam 114 through the workpiece wall 130.

In step 506, the machining of the workpiece 118 is monitored. The controller 112, for example, may signal the monitoring system 110 to monitor an interaction between the laser beam 114 and the workpiece 118 at the target location 116. The camera 120, for example, may capture one or more images of the interaction between the laser beam 114 and the workpiece 118 at the target location 116 during the formation of the respective cooling aperture 64. The images may be captured at various stages during the formation of the respective cooling aperture 64. An image, for example, may be captured at the start of the formation of the respective cooling aperture 64; e.g., see FIG. 7A. An image may be captured at an intermediate stage of the formation of the respective cooling aperture 64; e.g., see FIG. 7B. An image may also or alternatively be captured at an end stage of the formation of the respective cooling aperture 64; e.g., see FIG. 7C. To prevent or reduce image washout, the electronic shutter 124 is operated with a relatively short exposure time. Utilizing this short exposure time, the images captured by the camera 120 may include relatively detailed information regarding (e.g., a clear image of) the interaction between the laser beam 114 and the workpiece 118 at the target location 116.

In step 508, a parameter associated with the respective cooling aperture 64 being formed in the workpiece 118 is determined. The controller 112, for example, may receive the image data from the monitoring system 110 and its camera 120. This image data may include and/or may be indicative of information included in and/or otherwise obtained from the image captured of the interaction between the laser beam 114 and the workpiece 118 at the target location 116. The controller 112 may process the image data and its information to determine the parameter. For example, using the information from the captured image, the controller 112 may determine information about the interaction between the laser beam 114 and the workpiece 118 at the target location 116 such as a geometry of the interaction. Here, the determined parameter may be a geometric shape of the interaction, a width (e.g., a diameter) of the interaction, a cross-sectional aera of the interaction, etc. The controller 112 may then use this laser beam-workpiece information (and/or otherwise use the original image data) to determine information about the respective cooling aperture 64 being formed such as a geometry of a section 132 of the respective cooling aperture 64 which has been formed at the target location 116 and/or a geometry of the entire section 132 of the respective cooling aperture 64 which has been formed at the target location 116. Here, the determined parameter may be a geometric shape of the formed aperture section 132, a width (e.g., a diameter) of the formed aperture section 132, a cross-sectional aera of the formed aperture section 132, etc. The controller 112 may also or alternatively determine such parameter(s) about the respective cooling aperture 64 at or following breakthrough.

While the determined parameter is described above as a geometric characteristic of the laser beam-workpiece interaction and/or the respective aperture being formed, the present disclosure is not limited thereto. The controller 112 may also or alternatively determine one or more parameters regarding a formation stage of the respective cooling aperture 64. For example, by comparing the image data to expected imaged data, the controller 112 may determine if the laser beam 114 is about to or has broken through the substrate material of the workpiece 118. For example, the light intensity and/or color may change at or about breakthrough. In another example, a process material such as wax may be disposed next to the workpiece first surface 134. Here, the light and/or color may change as the laser beam 114 stops interacting with the substrate material and hits the process material.

Using the steps 506 and 508, the light at the laser beam-workpiece interaction may be measured and then compared to a predetermined (e.g., optimum) light expected to be produced during the machining (e.g., laser drilling) to make sure machining process is running correctly. The amount of light captured may then be reduced so the laser beam-workpiece interaction can be measured/related to a cooling aperture diameter. The distribution of the wavelengths of the light may be measured, which distribution of the wavelengths of the light may indicate the need to change the drilling parameters (into different layers). A change in the light may also indicate when the respective cooling aperture 64 is completely through and/or even that edges of the respective cooling aperture 64 are "cleaned" out.

In some embodiments, the electronic shutter 124 may be synchronized with the laser beam 114. The opening of the electronic shutter 124, for example, may be synchronized with one or more pulses of the laser beam 114. For example, the electronic shutter 124 may be opened and closed and an image of the laser beam-workpiece interaction may be captured during a (e.g., single) pulse of the laser beam 114. In another example, the electronic shutter 124 may be opened and closed and an image of the laser beam-workpiece interaction may be captured at an end of a (e.g., single) pulse of the laser beam 114. In still another example, the electronic shutter 124 may be opened and closed and an image of the laser beam-workpiece interaction may be captured at a beginning of a (e.g., single) pulse of the laser beam 114.

Since the interaction between the laser beam 114 and the workpiece 118 at the target location 116 may be monitored in real time, the controller 112 may use the determined parameter and/or information obtained based on the determined parameter to control subsequent stages of the machining of the respective cooling aperture 64. For example, where is it determined that the geometry of the laser beam-workpiece interaction and/or the formed aperture section 132 at the target location 116 is different than expected, an additional step may be taken to further process (e.g., enlarge) the formed aperture section 132. In another example, the machining step 504 may be terminated following determination of breakthrough. Moreover, the controller 112 may model a flow test for the respective cooling aperture 64 after formation to ensure, for example, the modeled flow matches or is within tolerance of a design specification for the respective cooling aperture 64.

In step 510, the method steps 504, 506 and 508 may be repeated one or more times to form one or more additional cooling apertures 64 in the workpiece 118. Upon formation of these cooling apertures 64, the machined workpiece 118 may form the (e.g., complete / fully formed) fluid cooled component 60. The formation of the additional cooling apertures 64 may be performed serially. Alternatively, multiple cooling apertures 64 may be formed concurrently. For example, a first section of each cooling aperture 64 in a cooling aperture set may be serially formed, then a second section of each cooling aperture 64 in the cooling aperture set may be serially formed, and so on until the cooling apertures 64 in the cooling aperture set are completely formed.

By real time monitoring the formation of the cooling aperture(s) 64 during the manufacturing method 500, additional testing and/or inspection of the completed fluid cooled component 60 may be omitted. For example, post machining inspection and/or flow tests may be omitted where the controller 112 is able to verify complete cooling aperture formation during the machining of that cooling aperture 64. This may significantly reduce time and costs associated with forming the fluid cooled component 60. Moreover, by monitoring the machining in real time, the need for post inspection re-machining may be obviated.

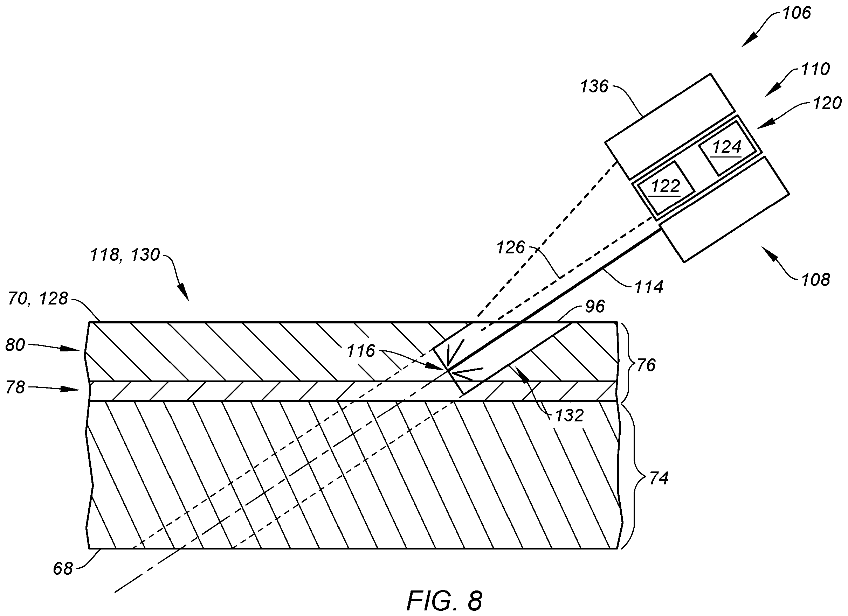

In some embodiments, the monitoring system 110 and its camera 120 may also be used for initially positioning the machining system 108 relative to the workpiece 118. The camera 120, for example, may be used for locating the initial target location 116 to start the machining. Alternatively, referring to FIG. 8, the monitoring system 110 may include an additional camera 136 for positioning the machining system 108 and/or other tasks related to the manufacturing method 500.

A typical video camera may have a two-dimensional (2D) array of photodetectors used for capturing light. These photodetectors may capture light at a frequency such as 60 hertz or 120 hertz. Such photodetectors may thereby shutter to collect light for each new image every 0.0167 seconds (for 60 Hz) or 0.00833 seconds (for 120 Hz). During this period of time, the light hits (e.g., is collected by) the photodetectors and the photodetectors are charged by / register the amount of light hitting them. Once the set time has been reached, the charge per photodetector is recorded and the amount of charge for a specific photodetector, along with its array position (e.g., X and Y position) can be sent to a display for viewing.

Under normal viewing conditions, the sensitivity of the photodetectors are configured such that the photodetectors can see under ambient light with some adjustment of an adjustable aperture to lower or increase the amount of light reaching the photodetectors. However, when machining with a laser (laser drilling), the amount of light produced may greatly exceed the sensitivity of photodetectors and they may become saturated or reach a level where no image can be seen because the camera aperture cannot block enough light.

To facilitate use of a camera under normal and very bright conditions, an electronic signal may be used to shorten the time that the photodetector array is allowed to collect light. This can be adjusted to very short time periods (e.g., ≤ 10⁻⁶ seconds) and the data from the photodetector array (e.g., the amount of charge on the photodetectors and the location in the photodetector array) can be stored and/or viewed. Such short time periods significantly reduce the photons striking the photodetectors and may thereby function much like a camera aperture. Such a process describes an embodiment of electronic shuttering the light striking the photodetector array. By changing the time the "shutter" is open, the camera can view something under normal light conditions or under very bright light conditions. However, since no data is collected while the electronic shutter blocks the light collection, a video image taken while using the electronic shutter may appear like a strobe. Such a strobe effect is beneficial in a laser machining environment as it facilitates taking measurements and collecting other data as described above.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A manufacturing method, comprising:
machining a workpiece (118) using a laser beam (114) to form a feature in the workpiece (118);
capturing an image of an interaction between the laser beam (114) and material of the workpiece (118) that is machined to form the feature in the workpiece (118), the image captured using a camera (120) comprising an electronic shutter (124); and
determining a parameter associated with the feature being machined in the workpiece (118) based on information from the image.

2. The manufacturing method of claim 1, wherein the method further comprises:
forming a component (60) of a turbine engine (20), the forming of the component (60) of the turbine engine (20) comprising the machining of the workpiece (118) to form the feature; and
the feature comprising a cooling hole (64) in the component (60) of the turbine engine (20).

3. A manufacturing method, comprising:
machining a workpiece (118) using a laser beam (114) to form a feature in the workpiece (118);
monitoring an interaction between the laser beam (114) and material of the workpiece (118) being machined to form the feature in the workpiece (118), the interaction monitored in real time during the machining of the workpiece (118) using a camera (120) comprising an electronic shutter (124), and the camera (120) outputting data indicative of the interaction; and
processing the data output by the camera (120) to determine a parameter associated with the feature being machined in the workpiece (118).

4. The manufacturing method of claim 3, wherein the feature comprises a hole (64) in the workpiece (118).

5. A manufacturing method, comprising:
machining an aperture (64) into a workpiece (118) using a laser beam (114);
capturing an image of an interaction between the laser beam (114) and the workpiece (118) during the machining of the aperture (64) using a camera (120) comprising an electronic shutter (124); and
determining a parameter associated with the aperture (64) based on information from the image.

6. The manufacturing method of any of claims 1 to 5, wherein:
the parameter is indicative of a geometry of the interaction between the laser beam (114) and the workpiece (118); or
the parameter is indicative of a diameter of the interaction between the laser beam (114) and the workpiece (118).

7. The manufacturing method of any of claims 1 to 5, wherein:
the parameter is indicative of an area of the interaction between the laser beam (114) and the workpiece (118).
the parameter is indicative of break-through of the laser beam (114) through the workpiece (118).

8. The manufacturing method of any of claims 1 to 5, wherein the parameter is indicative of a geometry, diameter, or area of a section (132) of the aperture (64) which has been machined into the workpiece (118) at a point in time when the image is captured.

9. The manufacturing method of any preceding claim, further comprising synchronizing the electronic shutter (124) with a pulse of the laser beam (114) to capture the image of the interaction between the pulse of the laser beam (114) and the workpiece (118).

10. The manufacturing method of claim 9, wherein the electronic shutter (124) is synchronized with the pulse of the laser beam (114) to capture the image at an end of the pulse of the laser beam (114).

11. The manufacturing method of claim 9, wherein the electronic shutter (124) is synchronized with the pulse of the laser beam (114) to capture the image at a beginning of the pulse of the laser beam (114).

12. The manufacturing method of any preceding claim, wherein the electronic shutter (124) has a shutter time equal to or less than 500 microseconds.

13. The manufacturing method of any preceding claim, wherein:
the camera (120) further comprises a complementary metal-oxide semiconductor image detector (122) which captures the image; or
the camera (120) further comprises a charged coupled device image detector (122) which captures the image.

14. The manufacturing method of any preceding claim, wherein a line of sight (126) of the camera (120) is parallel with the laser beam (114).

15. The manufacturing method of any preceding claim, further comprising:
forming a component (60) of a turbine engine (20), the forming of the component (60) of the turbine engine (20) comprising the machining of the aperture into the workpiece (118); and
the aperture (64) comprising a cooling hole.
